# EUROPÄISCHE PATENTSCHRIFT

(11) **EP 3 034 982 B1**
(45) Veröffentlichungstag und Bekanntmachung des Hinweises auf die Patenterteilung: **31.01.2018**
(21) Anmeldenummer: 15199800.2
(22) Anmeldetag: 14.12.2015
(51) Int. Cl.: F41G 1/38, F41G 1/40

(54) **BETÄTIGUNGSELEMENT FÜR DIE ZIELMARKE EINES ZIELFERNROHRS MIT EINER ARRETIERUNG**
ACTUATING ELEMENT FOR THE SIGHTING MARK OF A TARGET TELESCOPE WITH LOCKING
ÉLÉMENT D'ACTIONNEMENT POUR LE REPÈRE DE VISÉE D'UNE LUNETTE DE VISÉE COMPRENANT UN DISPOSITIF D'ARRÊT

(30) Priorität: 19.12.2014 AT 509322014
(43) Veröffentlichungstag der Anmeldung: 22.06.2016
(73) Patentinhaber: Swarovski-Optik KG., 6067 Absam (AT)
(72) Erfinder: ÖTTL, Peter, 6068 Mils (AT)
(74) Vertreter: Burger, Hannes

(56) Entgegenhaltungen:
- EP-A2- 2 472 214
- EP-B1- 1 959 221
- DE-A1-102010 060 343
- DE-U1-202012 012 707

## Beschreibung

Die Erfindung betrifft ein Betätigungselement zum Einstellen der Lage einer Zielmarke eines Zielfernrohrs entsprechend dem Oberbegriff des Anspruches 1.

Beim Einschießen einer Waffe gemeinsam mit einer Zieleinrichtung bzw. einem Zielfernrohr werden üblicherweise zunächst auftretende Abweichungen des tatsächlichen Auftreffpunktes eines Geschoßes von dem gewünschten Auftreffpunkt bzw. der Lage der Zielmarke dadurch beseitigt, dass die Ausrichtung des die Zielmarke tragenden Innenrohrs mit Hilfe gattungsgemäßer Betätigungselemente verändert wird. Ein solches Einschießen erfolgt bekanntlich bei einer festen Schussentfernung (beispielsweise 100 m) mit einer horizontal ausgerichteten Visierlinie auf ein Ziel und unter Verwendung einer für die Waffe typischen Munition. Gattungsgemäße, auch als Stelltürme bezeichnete, Betätigungselemente erlauben darüber hinaus auch noch die Berücksichtigung von in der praktischen Anwendung auftretenden Abweichungen zu den ursprünglichen Einschießbedingungen. Zu diesen Einflussfaktoren, die berücksichtigt werden müssen, zählen vor allem eine von der ursprünglichen Einschussentfernung abweichende Zieldistanz als auch ballistische Kennwerte der verwendeten Munition bzw. des verwendeten Geschoßes. Beim Stand der Technik ist es daher auch bekannt, gattungsgemäße Betätigungselemente mit einem oder auch mehreren, aufschiebbaren Indexelementen zu versehen. Mit Hilfe von an den Indexelementen angebrachten Markierungen können so schnell Einstellungen der Stelltürme vorgenommen werden, durch die abweichende Schussentfernungen und/oder verwendete Munitionstypen berücksichtigt werden können. Nachteilig bei aus dem Stand der Technik bekannten Betätigungselementen ist, dass Änderungen der Einstellung der Indexelemente oft umständlich und aufwändig nur unter Verwendung von Werkzeugen möglich sind. Auch erweist sich die Vornahme solcher Änderungen der Einstellungen als sehr fehleranfällig. EP 2 472 214 A2 offenbart ein Betätigungselement gemäß dem Oberbegriff des Anspruchs 1. Bei dem Stellturm gemäß dem Dokument EP 2 472 214 A2 ist zum fixieren des Stellknopfes relativ zu dem Rumpfgehäuse eine Arretierung vorgesehen, die durch einen in den Stellknopf an einem Umfang verlaufende Rastnutverzahnung, ein mit der Rastnutverzahnung in Eingriff stehendes Halteelement und einen Riegelbolzen ausgebildet ist. Mithilfe dieses in axialer Richtung des Betätigungselementes verschiebbaren Riegelbolzens kann das Halteelement in einer Vertiefung der Rastnutverzahnung formschlüssig fixiert werden. Das Halteelement ist dabei in einem drehfest mit dem Rumpfgehäuse verbundenen Zwischengehäuse gelagert. Ein Wechsel des Riegelbolzens zwischen einer das Halteelement fixierenden und einer das Halteelement nicht fixierenden Stellung erfolgt durch Anheben bzw. Niederdrücken des Stellknopfes.

Es ist die Aufgabe der Erfindung ein Betätigungselement zu schaffen, bei dem irrtümlich oder unbemerkt auftretende Änderungen der Einstellung der Zielmarke zuverlässiger vermieden werden können.

Diese Aufgabe der Erfindung wird gelöst durch ein Betätigungselement nach Anspruch 1, wobei zum Einstellen der Lage einer Zielmarke eines Zielfernrohres mit einem Rumpfgehäuse, einer in dem Rumpfgehäuse um eine Rotationsachse drehbar gelagerten Spindeln, einem Stellknopf zum Bewegen der Spindel in dem Rumpfgehäuse und mit einer Arretierung zum Fixieren des Stellknopfs relativ zu dem Rumpfgehäuse. Dabei umfasst die Arretierung des Betätigungselementes eine in dem Stellknopf an einem Umfang verlaufende Rastnutverzahnung, zumindest eine mit der Rastnutverzahnung in Eingriff stehendes Halteelement und zumindest einen Riegel zur formschlüssigen Fixierung des Halteelements in einer Vertiefung der Rastnutverzahnung, wobei das Halteelement in einem drehfest mit dem Rumpfgehäuse verbundenen Zwischengehäuse gelagert ist. Dies hat den Vorteil, dass in einem offenen Zustand der Arretierung der Stellknopf relativ leichtgängig verstellt werden kann, während in einem geschlossenen Zustand der Arretierung diese einer Verdrehung einen relativ hohen Wiederstand entgegen setzt. Vorteilhaft ist auch die Weiterbildung, wobei der Stellknopf eine Trägerhülse mit einem oberen Hülsenabschnitt und einem kreisscheibenförmigen, nach außen ragenden Kragen umfasst und die Rastnutverzahnung an einem Innenumfang des Kragens ausgebildet ist. Dadurch weist die Rastnutverzahnung bezüglich der Rotationsachse einen besonders großen Radius auf, sodass auch relativ große, an dem Stellknopf angreifende Drehmomente sicher aufgenommen werden können.

In dem an einem Außenumfang des Kragens der Trägerhülse eine Skala ausgebildet ist, kann die Stellung der Spindel des Betätigungselements und somit der einzustellenden Zielmarke einfach abgelesen werden.

Von Vorteil ist auch die Ausbildung des Betätigungselementes gemäß der die Trägerhülse mit einem unteren Hülsenabschnitt in dem Zwischengehäuse drehbar gelagert ist, wobei in dem unteren Hülsenabschnitt eine innenliegende Verzahnung ausgebildet ist. Dies erlaubt den Aufbau eines modular ausgebildeten Betätigungselementes, das in ein Basismodul einerseits und ein davon trennbares bzw. abnehmbares Kopfmodul andererseits unterteilt ist.

Gemäß einer Ausbildungsform des Betätigungselements ist vorgesehen, dass das Zwischengehäuse einen rohrförmig ausgebildeten Abschnitt und einen in einem oberen Endbereich daran anschließenden nach innen weisenden kreisringscheibenförmigen Abschnitt umfasst und weiters dass an einem äußeren Umfang des unteren Hülsenabschnitts der Trägerhülse eine Nut ausgebildet ist und die Lagerung der Trägerhülse in dem kreisringscheibenförmigen Abschnitt des Zwischengehäuses durch einen in die Nut eingesetzten Sicherungsring axial fixiert ist.

Vorteilhaft ist auch die Weiterbildung wonach auf dem kreisringscheibenförmigen Abschnitt des Zwischengehäuses ein Mantelwandabschnitt mit einem in radialer Richtung verlaufenden Lagerloch zur Aufnahme des Halteelements ausgebildet ist. In dem kreisringscheibenförmigen Abschnitt des Zwischengehäuses ist dem Lagerloch benachbart ein kreisbogenförmiger Schlitz ausgebildet. Von Vorteil ist dabei auch, dass der zumindest eine Riegel durch den kreisbogenförmigen Schlitz hindurchragt. Dadurch kann der Riegel bedarfsweise in eine das Halteelement in der Rastnutverzahnung fixierende Stellung gebracht werden. Durch die Anordnung des Riegels an dem Sperrring erreicht der Riegel eine insgesamt höhere Stabilität und größere Funktionssicherheit.

Von Vorteil ist auch die Weiterbildung des Betätigungselements sodass der Arretierring um die Rotationsachse schwenkbar ist. Weiters ist vorgesehen, dass an dem Arretierring ein nach innen vorstehender Mitnehmer befestigt ist und in dem rohrförmigen Abschnitt des Zwischengehäuses ein über einen Teil des Umfangs verlaufender Schlitz ausgebildet ist, wobei der Mitnehmer durch den Schlitz hindurch reicht und mit dem Sperrring bedarfsweise in Eingriff gebracht werden kann. Der Sperrring ist darüber hinaus mit einem ersten Anschlag und einem zweiten Anschlag ausgebildet, wobei der erste Anschlag und der zweite Anschlag durch eine an einem unteren Rand des Sperrrings vorgesehene axiale Rückversetzung gebildet sind. Dadurch wird in vorteilhafter Weise erreicht, dass die Übertragung der Schwenkbewegung des Arretierrings auf den Sperrring und somit den Riegel nur über einen begrenzten Winkelbereich stattfindet. Vorteilhaft ist dabei, dass der Mitnehmer in die axiale Rückversetzung des Sperrrings hineinragt und durch Verschwenken des Arretierrings zwischen dem ersten Anschlag und dem zweiten Anschlag hin und her bewegt werden kann und weiters dass der Mitnehmer entweder an dem ersten Anschlag oder an dem zweiten Anschlag anliegt.

Gemäß einer vorteilhaften Weiterbildung ist vorgesehen, dass sich die axiale Rückversetzung in dem Sperrring über eine Bogenlänge erstreckt, die einem Winkel von etwa 70° entspricht und sich der in dem Zwischengehäuse ausgebildete Schlitz über etwa 90° erstreckt. Dies hat den Vorteil, dass der offene und der geschlossene Zustand der Arretierung an der Stellung des Arretierrings leicht ablesbar ist und gleichzeitig die geschlossene Stellung gegen ein unbeabsichtigtes Lösen der Arretierung gesichert ist.

Vorteilhaft ist auch die Ausgestaltung der Betätigungselementes wonach der Sperrring an einer Stelle seines Umfangs eine Lücke in seiner Ringform aufweist, da dadurch die Montage in dem Zwischenring erleichtert wird.

Von Vorteil ist auch die Weiterbildung des Betätigungselements wonach an einem äußeren Umfang des Zwischengehäuses ein Indexring angeordnet ist, wobei der Indexring einen Nullindex aufweist und der Indexring oberhalb des Arretierrings positioniert ist, da dadurch der Nullpunkt der Skala der Trägerhülse gekennzeichnet werden kann aber auch die Lage des Nullpunktes justierbar gestaltet werden kann.

Gemäß einer vorteilhaften Weiterbildung ist vorgesehen, dass der Indexring einen ersten Anschlag und einen zweiten Anschlag umfasst, wobei die Anschläge um 180° versetzt an dem kreisringscheibenförmigen Abschnitt des Zwischengehäuses anliegend angeordnet sind. Durch diese Ausbildung wird die Fixierung der axialen Lage des Indexrings erleichtert.

Vorteilhaft sind auch die Weiterbildungen wonach der erste Anschlag oder der zweite Anschlag des Indexrings einen radial durchgehenden Schlitz aufweist und in dem Schlitz eine Justierschraube angeordnet ist und dass die Justierschraube mit einer Exzenterscheibe ausgebildet ist, wobei die Justierschraube in den kreisscheibenförmigen Abschnitt des Zwischengehäuses eingeschraubt ist. Dadurch kann der Indexring bzw. der an dem Indexring angeordnete Nullpunkt in seiner Lage an dem Zwischengehäuse verschwenkt werden.

Gemäß einer weiteren vorteilhaften Weiterbildung des Betätigungselementes ist zum Bewegen der Spindel in dem Rumpfgehäuse eine Rastnabe im Rumpfgehäuse drehbar gelagert, wobei die Rastnabe einen oberen Rohrabschnitt mit einer außenliegenden Verzahnung aufweist und wobei die außenliegende Verzahnung mit der innenliegenden Verzahnung des unteren Hülsenabschnitts des Zwischengehäuses in Eingriff steht. Dies erleichtert einen modularen Aufbau des Betätigungselements wobei das Betätigungselement in ein Kopfmodul und ein Rumpfmodul zerlegt werden kann.

Gemäß einer alternativen Ausführungsform des Betätigungselementes ist vorgesehen, dass ein Drehring mit der Rastnabe drehgekoppelt verbunden ist, wobei der Drehring auf einem Scheibenabschnitt der Rastnabe aufliegend angeordnet ist. Der Drehring ist weiters mit einer Innenverzahnung und die Rastnabe mit einer Außenverzahnung ausgebildet, wobei in einer Grundstellung die Innenverzahnung und die Außenverzahnung miteinander in Eingriff stehen. Von Vorteil ist auch, dass ein zwischen dem Drehring und der Rastnabe wirkendes Federelement angeordnet ist, wobei unter der Wirkung des Federelementes der Eingriff zwischen der Innenverzahnung und der Außenverzahnung aufrecht erhalten wird. Damit kann die Relativstellung des Drehrings relativ zu der Rastnabe zuverlässig aufrecht erhalten werden.

Von Vorteil ist auch, dass der Drehring an einem äußeren Umfang in einem oberen Randbereich mit einer Nullmarkierung versehen ist. Der Drehring kann außerdem an seinem oberen Randbereich mit einer Rändelung ausgebildet sein. Die Weiterbildung, wonach der Drehring entgegen der rückstellenden Federkraft des Federelements angehoben werden kann, wobei die Innenverzahnung und die Außenverzahnung außer Eingriff gebracht werden können, hat den Vorteil, dass damit Einstellungen der Spindel, die zuverlässig wieder aufgefunden werden sollen, gekennzeichnet werden können.

Vorteilhaft sind auch Weiterbildungen sodass in der Trägerhülse ein Schließmechanismus ausgebildet ist, wobei der Schließmechanismus in einer geschlossenen Stellung formschlüssig mit der Rastnabe verbunden ist und dass der Schließmechanismus eine offene Stellung aufweist, wobei in der offenen Stellung das Betätigungselement in ein Kopfmodul und ein Rumpfmodul getrennt werden kann. Von Vorteil ist auch, wenn das Rumpfmodul zumindest das Rumpfgehäuse, die Spindel, die Rastnabe und den Drehring umfasst und dass die Arretierung in dem Kopfmodul angeordnet ist. Im Falle von Beschädigungen und folglich erforderlicher Reparaturen können diese auf einfachere Weise durchgeführt werden.

Zum besseren Verständnis der Erfindung wird diese anhand der nachfolgenden Figuren näher erläutert.

Es zeigen jeweils in stark vereinfachter, schematischer Darstellung:
- Fig. 1: ein Betätigungselement angeordnet an dem Hauptrohr eines Zielfernrohrs perspektivisch dargestellt;
- Fig. 2: einen Längsschnitt des Betätigungselements;
- Fig. 3: einen Längsschnitt des Kopfmoduls des Betätigungselements;
- Fig. 4: einen Längsschnitt des Rumpfmoduls des Betätigungselements;
- Fig. 5: Trägerhülse des Betätigungselements gemäß Fig. 2 perspektivisch dargestellt (von schräg unten);
- Fig. 6: das Zwischengehäuse des Betätigungselements gemäß Fig. 2 mit dem Arretierring und Teilen der Turmarretierung perspektivisch dargestellt;
- Fig. 7: einen Sperrring des Rumpfmoduls des Betätigungselements gemäß Fig. 2 perspektivisch dargestellt;
- Fig. 8: das Zwischengehäuse mit Teilen der Turmarretierung perspektivisch dargestellt;
- Fig. 9: das Zwischengehäuse mit dem Arretierring und mit dem Indexring gemäß Fig. 6.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

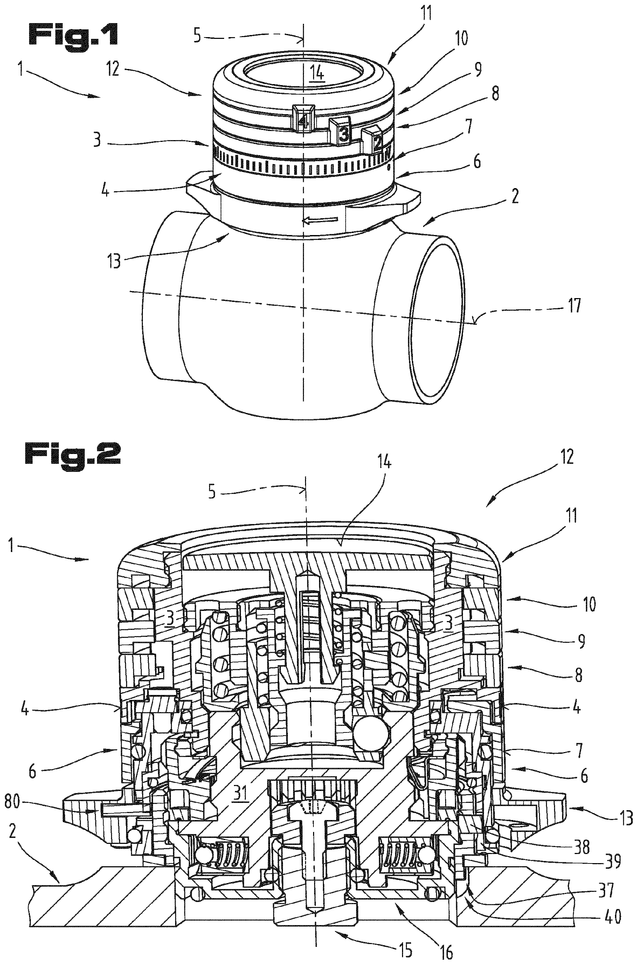

Die Fig. 1 zeigt ein erfindungsgemäßes Betätigungselement 1 zum Einstellen der Lage einer Zielmarke eines Zielfernrohrs in einer an einem Tubus 2 des Zielfernrohrs montierten Stellung perspektivisch dargestellt. Der obere Teil des Betätigungselementes 1 umfasst zunächst eine Trägerhülse 3 mit einer daran angebrachten Skala 4 zur Anzeige des Ausmaßes einer Verdrehung um eine Rotationsachse 5. Der die Skala 4 tragende ringförmige Bereich der Trägerhülse 3 fungiert gleichzeitig als ein erstes Indexelement zur Anzeige der eingestellten Lage der Zielmarke des Zielfernrohrs. Dazu ist andererseits an einem unterhalb der Trägerhülse 3 drehfest angeordneten Indexring 6 ein Nullindex 7 angebracht. Nach oben hin schließen sich an das erste Indexelement der Trägerhülse 3 ein zweites Indexelement 8, ein drittes Indexelement 9 und ein viertes Indexelement 10 an. Diese Indexelemente 8, 9, 10 sind auf die Trägerhülse 3 aufgesteckt und mit dieser drehfest verbunden. An einem oberen Endbereich der Trägerhülse 3 ist schließlich oberhalb des vierten Indexelementes 10 ein Kappenring 11 auf die Trägerhülse 3 aufgeschraubt. Die derart mit der Trägerhülse 3 verbundenen Indexelemente 8, 9, 10 bilden gemeinsam mit der Trägerhülse 3 und dem aufgeschraubten Kappenring 11 einen Stellknopf 12 des Betätigungselements 1.

Zur verdrehgesicherten Fixierung der jeweiligen Winkelstellung der Indexelemente 8, 9, 10 an der Trägerhülse 3 kann vorgesehen werden, dass der Kappenring 11 beim Aufschrauben auf die Trägerhülse 3 mit den Indexelementen 8, 9, 10 derart in Eingriff kommt, dass diese schließlich durch Erzeugung eines Reibschlusses gegeneinander gedrückt und derart fixiert werden. In dem hier beschriebenen, bevorzugten Ausführungsbeispiel ist jedoch vorgesehen, dass zwischen den Indexelementen 8, 9, 10 und einer Zylindermantelfläche der Trägerhülse parallel zur Richtung der Rotationsachse 5 verlaufende ineinandergreifende Verzahnungen vorgesehen sind, die ein unbeabsichtigtes Verdrehen der Indexelemente 8, 9, 10 im auf die Trägerhülse 3 aufgeschobenen Zustand durch eine formschlüssige Fixierung verhindern. Eine solche technische Lösung ist in dem Dokument EP 1 959 221 B1 der gleichen Anmelderin im Detail ausführlich beschrieben.

Das Betätigungselement 1 umfasst weiters auch noch in seinem, dem Tubus 2 des Zielfernrohrs zugewandten Endbereich einen Arretierring 13. Dieser Arretierring ist um die Rotationsachse 5 drehbar bzw. verschwenkbar ausgebildet. Der Arretierring 13 erlaubt es, den Stellknopf 12 in seiner Winkelstellung zu fixieren und so ein unbeabsichtigtes Verdrehen des Stellknopfes 12 zu verhindern.

In der Darstellung gemäß Fig. 1 ist schließlich auch noch in dem Kappenring 11 ein durch einen Benutzer betätigbarer Druckknopf 14 zu erkennen. Wie nachfolgend noch im Detail ausgeführt werden wird, kann mit dessen Hilfe das Betätigungselement 1 in ein auf dem Tubus 2 des Zielfernrohrs verbleibendes, erstes Modulteil einerseits und ein davon abnehmbares, zweites Modulteil andererseits zerlegt werden. Die so erreichte modulartige Konstruktion des Betätigungselements erlaubt ein sehr bequemes und rasches wechselweises Austauschen unterschiedlicher aber entsprechend modular aufgebauter Stellknöpfe 12.

Die Fig. 2 zeigt einen Längsschnitt entsprechend der Rotationsachse 5 des Betätigungselementes 1 teilweise perspektivisch dargestellt. Hier sind zunächst die bereits vorstehend beschriebenen gemeinschaftlich drehbaren Teile des Stellknopfs 12 des Betätigungselements 1 zu erkennen. Dies sind vor allem die Trägerhülse 3 mit den darauf aufgesteckten zweiten, dritten, vierten Indexelementen 8, 9, 10 und dem diese festhaltenden Kappenring 11. Die Drehbewegung des Stellknopfs 12 wird schließlich auf eine Spindel 15 übertragen, die in einem Rumpfgehäuse 16 um die Rotationsachse 5 in einem Gewinde drehbar gelagert ist. Das Rumpfgehäuse 16 ist seinerseits in eine entsprechende Öffnung des Tubus 2 des Zielfernrohrs eingeschraubt, wobei die Spindel 15 unten aus dem Rumpfgehäuse 16 hervorsteht. Wie an sich aus dem Stand der Technik bekannt ist, drückt die Spindel 15 auf ein in dem Tubus 2 des Zielfernrohrs angeordnetes Innenrohr (nicht dargestellt), das die Zielmarke bzw. das Absehen trägt. Je nach dem Ausmaß, mit dem die Spindel 15 dabei aus dem Rumpfgehäuse 16 hervorsteht, ist das Innenrohr relativ zu einer Längsachse 17 des Tubus 2 mehr oder weniger schräg ausgerichtet. Somit ermöglicht ein Ein- oder Ausschrauben der Spindel 15 eine Veränderung der Lage der Zielmarke bzw. des Absehens beim Durchblick durch das Zielfernrohr. Wie ebenfalls bereits aus dem Stand der Technik bekannt, bewirkt eine solche Verstellung eine Veränderung der räumlichen Lage der Visierlinie des Zielfernrohrs relativ zu der Laufachse der Schusswaffe auf der das Zielfernrohr befestigt ist.

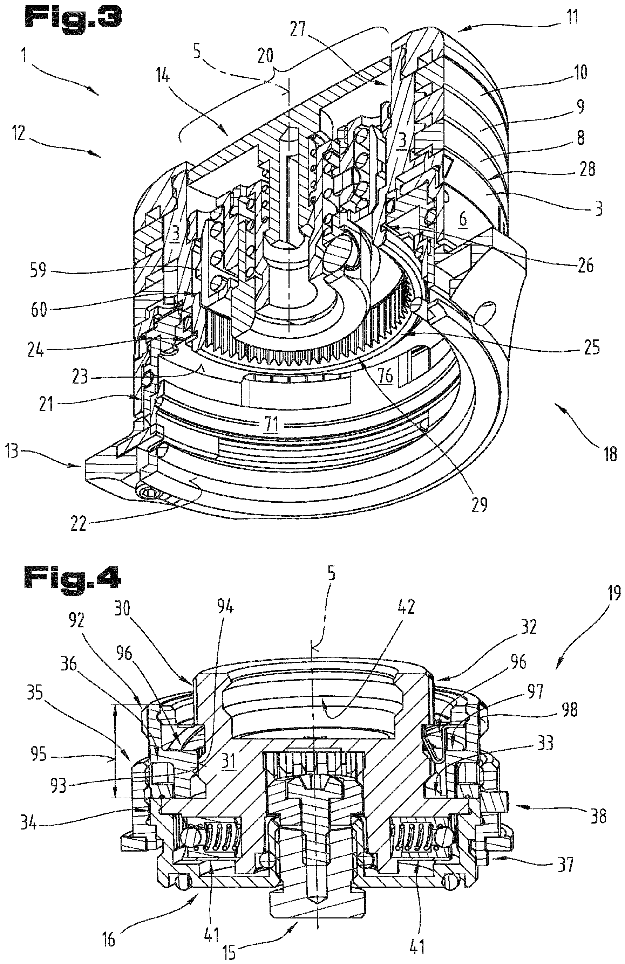

Der modulartige Aufbau des erfindungsgemäßen Betätigungselementes 1 ist besser aus den Darstellungen der Fig. 3 und 4 zu ersehen. Dabei zeigt die Fig. 3 ein Kopfmodul 18 und die Fig. 4 ein Rumpfmodul 19 des Betätigungselementes 1 jeweils separat dargestellt. Durch Gegenüberstellung der Fig. 3 und 4 ist auch ein Schließmechanismus 20 des Kopfmoduls 18 erkennbar, mit dem das Kopfmodul 18 an dem Rumpfmodul 19 befestigt werden kann. Lediglich durch Betätigen des Druckknopfs 14 des Schließmechanismus 20 kann die Verbindung von Kopfmodul 18 und Rumpfmodul 19 auf sehr komfortable Weise wieder gelöst werden.

Das Kopfmodul 18 weist als einen - im auf das Rumpfmodul 19 montierten Zustand - feststehenden Gehäuseteil ein Zwischengehäuse 21 auf. Das Zwischengehäuse 21 weist als Komponenten seiner Form einen im Wesentlichen rohrförmig ausgebildeten Abschnitt 22 und einen daran anschließenden nach innen weisenden Kragen in Gestalt eines kreisringscheibenförmigen Abschnitts 23 auf. Der Stellknopf 12 ist an dem Zwischengehäuse 21 drehbar gelagert befestigt, in dem die Trägerhülse 3 in dem kragenförmigen Abschnitt 23 des Zwischengehäuses 21 eingesetzt und durch einen Sicherungsring 24 in axialer Richtung (der Rotationsachse 5) fixiert ist. Dazu ist in einem unteren Hülsenabschnitt 25 der Trägerhülse 3 eine am äußeren Umfang ausgeformte Nut 26 zur Aufnahme des Sicherungsrings 24 vorgesehen.

Die Trägerhülse 3 kann grob gegliedert werden in den unteren Hülsenabschnitt 25, einen oberen Hülsenabschnitt 27 und einen zwischen dem unteren Hülsenabschnitt 25 und dem oberen Hülsenabschnitt 27 ansetzenden nach außen ragenden Kragen 28. Am Umfang des Kragens 28 der Trägerhülse 3 ist die schon einleitend erwähnte Skala 4 angebracht.

Zur Weiterleitung bzw. Übertragung einer Drehbewegung bei Betätigung des Stellknopfs 12 an die Spindel 15 des Betätigungselements 1 weist der untere Hülsenabschnitt 25 der Trägerhülse 3 eine innenliegende Verzahnung 29 auf. Im auf das Rumpfmodul 19 aufgesetzten Zustand (Fig. 2) steht diese Verzahnung 29 der Trägerhülse 3 mit einer komplementären außenliegenden Verzahnung 30 einer in dem Rumpfmodul 19 drehbar gelagerten Rastnabe 31 in Eingriff. Neben einem oberen Rohrabschnitt 32 weist die Rastnabe 31 einen nach außen wegstehenden Scheibenabschnitt 33 auf. Mit Hilfe dieses Scheibenabschnitts 33 ist die Rastnabe 31 an einem oberen Rand 34 des topfförmig ausgebildeten Rumpfgehäuses 16 drehbar gelagert. Der obere, äußere Rand 34 des Rumpfgehäuses 16 wird außerdem von einem Positionierring 35 mit einem Schraubring 36 umfasst. Der Positionierring 35 ist dabei in der Art einer Überwurfmutter an dem Rand 34 des Rumpfgehäuses 16 gelagert. Der obere Rand 34 des Rumpfgehäuses 16 einerseits und der Schraubring 36 andererseits schließen den Scheibenabschnitt 33 ein und bestimmen so die axiale Lage der Rastnabe 31. Das Rumpfgehäuse 16, der Positionierring 35 und der Schraubring 36 bilden so ein Lager für die Rastnabe 31, die um die gemeinsame Rotationsachse 5 drehbar ist.

Schließlich wird die von dem Stellknopf 12 ausgehende Drehbewegung von der Rastnabe 31 auf die Spindel 15 übertragen. Diese ist allerdings in dem Gewinde des Rumpfgehäuses 16 gelagert, wobei die Drehbewegung in eine Auf- oder Abbewegung umgewandelt wird. Eine Besonderheit des beschriebenen Ausführungsbeispiels des Betätigungselements 1 ist nun somit auch, dass die Bewegungen der Spindel 15 und der Rastnabe 31 in Richtung der Rotationsachse 5 voneinander entkoppelt sind. Dies wird dadurch ermöglicht, dass die Spindel 15 an ihrem oberen Endbereich eine Außenverzahnung aufweist, die mit einer entsprechenden Innenverzahnung der Rastnabe 31 in Eingriff steht (Fig. 4). Während die Spindel 15 bei einer Verdrehung auch eine Auf- oder Abbewegung vollführt, bleibt die axiale Lage der Rastnabe 31 unverändert. Dies trifft in gleicher Weise auch auf den Stellknopf 12 bzw. auf das gesamte Kopfmodul 18 zu und hat den Vorteil, dass die Höhe des Betätigungselements 1, mit dem dieses über den Tubus 2 vorsteht, stets unverändert bleibt.

Der Positionierring 35 ist an zumindest einer Stelle seines Umfangs mit einer nach unten vorstehenden Nase 37 ausgebildet. Zusätzlich ist an seinem Umfang ein radial nach außen stehender Stift 38 befestigt. Im zusammengebauten Zustand von Kopfmodul 18 und Rumpfmodul 19 kommt der Stift 38 des Positionierrings 35 in einer entsprechend axial verlaufenden Ausnehmung 39 (Fig. 2) an der Innenseite des hülsenförmigen Abschnitts 22 des Zwischengehäuses 21 zu Liegen. Andererseits ist in der in dem Tubus 2 vorgesehenen Öffnung zum Einschrauben des Betätigungselementes 1 eine Ausnehmung 40 zur Aufnahme der Nase 37 des Positionierrings 35 vorgesehen. Durch die Nase 37 und den Stift 38 des Positionierrings 35 wird somit eine Verdrehsicherung zur relativen Ausrichtung des Zwischengehäuses 21 des Kopfmoduls 18 in seiner relativen Lage zu dem Positionierring 35 bzw. den Tubus 2 des Zielfernrohrs realisiert. Im komplett montierten Zustand, das heißt wenn sowohl das Rumpfgehäuse 16 in dem Tubus 2 festgeschraubt ist als auch das Kopfmodul 18 auf dem Rumpfmodul 19 aufgesetzt und befestigt ist, bilden das Rumpfgehäuse 16, der Positionierring 17 und das Zwischengehäuse 21 gemeinsam ein drehfest angeordnetes Gehäuse. Relativ zu diesem Gehäuse sind der Stellknopf 12, die Rastnabe 31 und die Spindel 15 des Betätigungselements 1 gemeinsam drehbar.

Wie an sich aus dem Stand der Technik bekannt, ist zwischen der Rastnabe 31 und dem Rumpfgehäuse 16 eine Rasteinrichtung 41 vorgesehen. Durch die Rasteinrichtung 41 wird erreicht, dass das Verdrehen der Rastnabe 31 stets inkrementiert, das heißt schrittweise, um eine vorbestimmte, kleinste Winkeleinheit erfolgt. Die Teilung bzw. Inkrementierung der Rasteinrichtung 41 entspricht dabei günstigerweise der an der Skala 4 vorgesehenen Teilung.

Wie bereits im Zusammenhang mit der Beschreibung der Fig. 1 einleitend ausgeführt worden ist, weist das Betätigungselement 1 auch den Arretierring 13 auf. Dieser ist vorgesehen, um den Stellknopf 12 nach Vornahme einer gewünschten Einstellung in seiner Winkelstellung zu fixieren und so ein unbeabsichtigtes Verdrehen des Stellknopfs 12 zu verhindern. Wie besser anhand der Fig. 3 erkennbar ist, bildet der Arretierring 13 einen Bestandteil des Kopfmoduls 18 des Betätigungselementes 1 und ist an dem Zwischengehäuse 21 verschwenkbar gelagert. Durch ein Verdrehen bzw. ein Verschwenken dieses Arretierrings 13 kann ein zwischen der Trägerhülse 3 und dem Zwischengehäuse 21 vorgesehener Sperrmechanismus aktiviert werden. Ein weiteres Verdrehen des Stellkopfs 12 ist sodann nicht mehr möglich.

Einleitend sei hier betont, dass der nachfolgend beschriebene Sperrmechanismus unabhängig von der Art der Verbindung, die zwischen dem Kopfmodul 18 und dem Rumpfmodul 19 ausgebildet ist, seine Vorteile entfaltet. Die Ausbildung des Sperrmechanismus ist prinzipiell auch bei einem Betätigungselement 1 mit beispielsweise durch eine Schraube verbundenen Ober- und Unterteilen möglich. Ein Betätigungselement dieser Art ist z.B. in der Patentschrift EP 1 959 221 B1 der gleichen Anmelderin beschrieben. Dort wird eine zwischen der Trägerhülse und der Rastnabe ausgebildete Schnappverbindung durch eine axial angeordnete Schraube fixiert gehalten.

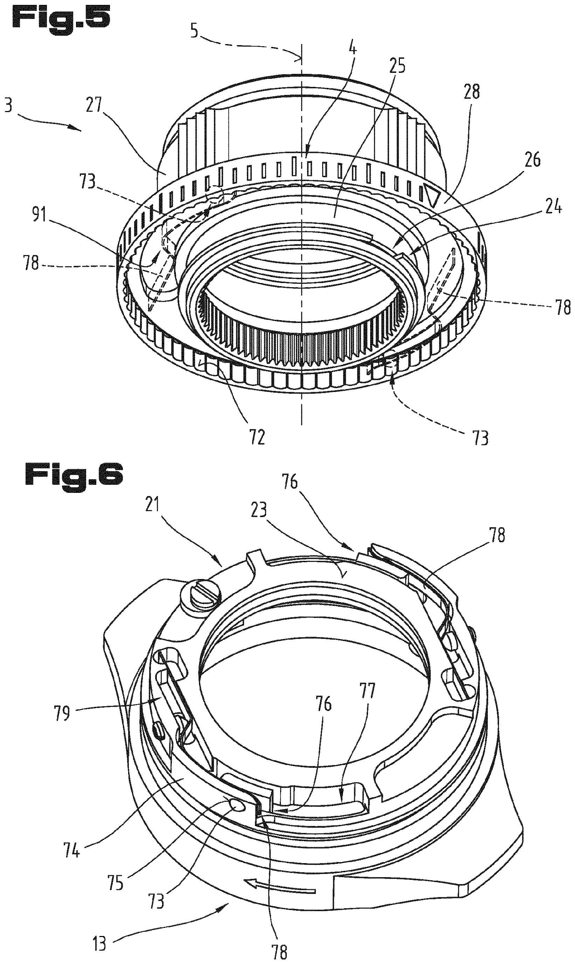

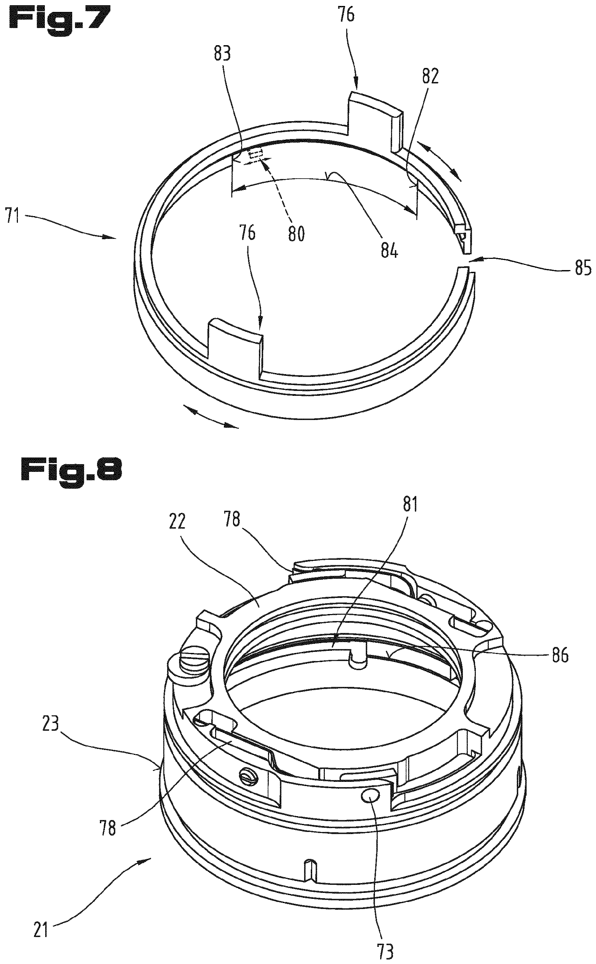

Die Funktionsweise dieses durch den Arretierring 13 betätigbaren Sperrmechanismus zwischen der Trägerhülse 3 und dem Zwischengehäuse 21 ist deutlicher anhand der Fig. 5 bis 8 zu erkennen. Die Fig. 5 zeigt die Trägerhülse 3 perspektivisch dargestellt (von schräg unten). Die Fig. 6 zeigt das Zwischengehäuse 21 mit dem Arretierring 13 und Teilen der Turmarretierung. Die Fig. 7 zeigt einen Sperrring 71. In Fig. 8 ist das Zwischengehäuse 21 dargestellt.

Als unmittelbar miteinander in Eingriff zu bringende Teile des zwischen der Trägerhülse 3 und dem Zwischengehäuse 21 wirkenden Sperrmechanismus ist einerseits an der Trägerhülse 3 eine Rastnutverzahnung 72 und andererseits zumindest ein in dem Zwischengehäuse 21 gelagertes Halteelement 73 vorgesehen. Das Halteelement 73 ist in dem Zwischengehäuse 21 derart gelagert, dass es mit der Rastnutverzahnung 72 der Trägerhülse 3 in Kontakt gebracht und bedarfsweise in einer der Vertiefungen der Rastnutverzahnung 72 in einer fixierten Lage festgehalten werden kann. Gemäß diesem Ausführungsbeispiel ist das Halteelement 73 in dem Zwischengehäuse 21 in radialer Richtung beweglich gelagert, während die Rastnutverzahnung 72 an einer Innenseite eines an dem Kragen 28 der Trägerhülse 3 angeordneten Rings ausgebildet ist. Die Rastnutverzahnung 72 wird somit durch unmittelbar nebeneinander liegende und in axialer Richtung verlaufende Vertiefungen gebildet. Im zusammengebauten Zustand von Zwischengehäuse 21 und Trägerhülse 3 befindet sich das Halteelement 73 in einer Position, in der es einer der Vertiefungen der Rastnutverzahnung 72 unmittelbar gegenüberliegt (strichliert eingezeichnetes Halteelement 73 in Fig. 5). Eine Arretierung der Trägerhülse 3 und somit insgesamt des Stellknopfs 12 des Betätigungselements 1 gegenüber einer weiteren Verdrehung kann dadurch erreicht werden, dass das Halteelement 73 nach außen gedrückt und in einer der Vertiefungen der Rastnutverzahnung 72 formschlüssig fixiert gehalten wird. In dem das Halteelement 73 in die Rastnutverzahnung 72 eingreift, wird die Trägerhülse 3 mitsamt dem Stellknopf 12 in seiner momentanen Winkelstellung festgehalten.

Als Halteelement 73 wird bevorzugt eine Kugel verwendet, wie in der Darstellung in Fig. 5 angedeutet ist. Alternativ können aber auch anders geformte Halteelemente 73 vorgesehen sein, wie beispielsweise ein Bauelement, das mit der Form eines Kolbens, vorzugsweise mit abgerundeten Enden, ausgebildet ist.

Gemäß diesem Ausführungsbeispiel ist vorgesehen, dass zwei Haltekugeln 73 in dem Zwischengehäuse 21 zum Zwecke einer Arretierung des Stellknopfes 12 vorgesehen sind. Die beiden Haltekugeln 73 sind dazu bezüglich der Rotationsachse 5 um 180° am Umfang versetzt angeordnet. Alternativ wäre es auch möglich, drei oder mehr solcher Haltekugeln 73 über den Umfang verteilt anzuordnen.

Zur Lagerung der Haltekugeln 73 ist an dem Zwischengehäuse 21 jeweils ein Mantelwandabschnitt 74 mit einem in radialer Richtung verlaufenden Lagerloch 75 ausgebildet. Das Lagerloch 75 ist gerade so gestaltet, dass sich die Haltekugel 73 darin hin und her bewegen kann. Die Haltekugel 73 kann insbesondere so weit bewegt werden, dass sie aus dem Lagerloch 75 weit genug hervorsteht, um in eine der Vertiefungen der Rastnutverzahnung 72 hineinragen zu können und darin zur Anlage gebracht werden zu können. Zur Fixierung der Haltekugeln 73 in dieser in die Rastnutverzahnung 72 eingreifenden Lage ist der in Fig. 7 dargestellte Sperrring 71 vorgesehen. Dieser ist mit jeweils einem einer der beiden Haltekugeln 73 zugeordneten Riegel 76 ausgebildet. Im zusammengebauten Zustand ist der Sperrring 71 an einem inneren Umfang des Zwischengehäuses 21 angeordnet, während die beiden Riegel 76 durch kreisbogenförmige Schlitze 77 des oberen kreisringscheibenförmigen Abschnitts 23 des Zwischengehäuses 21 hindurchreichen und nach oben hin vorstehen (Fig. 3, 6). Die Riegel 76 bzw. deren Anordnung an dem Sperrring 71 sind gerade so dimensioniert, dass - wenn sie den Lagerlöchern 75 gegenüberliegend positioniert sind - die Haltekugeln 73 in ihrer in der Rastnutverzahnung 72 eingerasteten Lage blockiert sind. Durch Betätigen des Arretierrings 13 kann der Sperrring 71 verschwenkt werden, um dadurch die Arretierung zu lösen oder wieder herzustellen. Je nach Drehrichtung des Arretierrings 13 bzw. des Sperrings 71 erfolgt ein Wechsel der Riegel 76 von einer gesperrten Lage bzw. von einem gesperrten Zustand (Fig. 6) zu einem offenen Zustand oder umgekehrt. Werden die Riegel 76 durch Verschwenken des Sperrrings 71 aus der den Haltekugeln 73 unmittelbar gegenüberliegenden Stellung wegbewegt, so können die Haltekugeln 73 in den Lagerlöchern 75 wieder bewegt werden und wird dadurch der blockierende Eingriff der Haltekugeln 73 in die Rastnutverzahnung 72 aufgehoben. Der Stellknopf 12 mit der Trägerhülse 3 kann sodann wieder verdreht werden.

Gemäß einer bevorzugten Ausführungsform ist in diesem Ausführungsbeispiel vorgesehen, dass die Haltekugeln 73 jeweils durch eine Feder 78 gegen die Rastnutverzahnung 72 gedrückt gehalten werden. Zur Veranschaulichung dessen sind dazu in der Darstellung der Trägerhülse 3 in Fig. 5 jeweils die Haltekugel 73 und die Feder 78 strichliert eingezeichnet, wobei die gezeigte Stellung ihrer Lage im zusammengebauten Zustand von Trägerhülse 3 und Zwischengehäuse 21 entspricht. Beim Verdrehen des Stellknopfs 12 bleiben die Haltekugeln 73 dadurch mit der Oberfläche der Rastnutverzahnung 72 ständig in Kontakt und können über diese eine Abwälzbewegung ausführen. Die Federn 78 sind vorzugsweise durch Blattfedern ausgebildet und weisen einen Abschnitt auf, der an einer Innenseite des Mantelwandabschnitts 74 im Bereich des Lagerlochs 75 für die Haltekugel 73 im Wesentlichen parallel zu dem Mantelwandabschnitt 74 ausgerichtet ist. Im gesperrten Zustand kommt dieser Abschnitt der Feder 78 zwischen der Haltekugel 73 und dem Riegel 76 zu liegen und werden die Haltekugel 73 und die Feder 78 gemeinsam durch den Riegel 76 fixiert gehalten. Die Federn 78 sind jeweils in einer in dem oberen Scheibenabschnitt 23 des Zwischengehäuses 21 ausgebildeten Ausnehmung 79 bzw. Vertiefung befestigt.

Die vorstehend beschriebene Anordnung der Rastnutverzahnung 72 mit der durch die Feder 78 gegen die Rastnutverzahnung 72 gedrückt gehaltenen Haltekugel 73 bildet selbst eine Rasteinrichtung, mit der eine schrittweise bzw. inkrementelle Verstellung der Rastnabe 31 bzw. der Spindel 15 vorgegeben wird. Gemäß einem alternativen Ausführungsbeispiel wird die inkrementelle Verstellung der Spindel 15 alleine durch diese zwischen der Trägerhülse 3 und dem Zwischengehäuse 21 ausgebildete Turmarretierung bewirkt, d.h. die in Fig. 4 dargestellte Rasteinrichtung 41 des Rumpfmoduls 19 ist dabei nicht vorgesehen. Eine weitere alternative Variante eines Bedienungselementes 1 sieht vor, dass die Vertiefungen der Rastnutverzahnung 72 und der Rasteinrichtung 41 des Rumpfmoduls 19 unterschiedliche Winkelteilungen bzw. Anzahlen von Vertiefugen aufweisen. Vorzugsweise ist vorgesehen, dass das Verhältnis der jeweiligen Anzahl der Vertiefungen ganzzahlig bzw. rationalzahlig ist. So könnte die Anzahl der Vertiefungen bei der Rasteinrichtung 41 des Rumpfmoduls 19 beispielweise ein Fünftel der Anzahl der Vertiefungen der Rastnutverzahnung 72 der Trägerhülse 3 sein. Dies hätte als Effekt, dass bei einer Verstellung mit dem Stellknopf 12 jeder fünfte Inkrementalschritt durch einen kräftigeren bzw. verstärkten Einrastvorgang für den Benutzer deutlicher taktil oder auch akustisch erkennbar wird.

Wie erwähnt, wird das Verschwenken des Sperrrings 71 durch ein Verschwenken des Arretierrings 13 bewirkt. Der Arretierring 13, der an einer Außenseite des rohrförmigen Abschnitts 22 des Zwischengehäuses 21 drehbar gelagert ist, weist zur Übertragung der Schwenkbewegung an den Sperrring 71 einen Mitnehmer 80 auf (Fig. 2). Dazu ist außerdem in dem rohrförmigen Abschnitt 22 des Zwischengehäuses 21 ein über einen Teil dessen Umfang verlaufender Schlitz 81 vorgesehen (Fig. 8). Der Sperrring 71 ist schließlich mit einem ersten Anschlag 82 und mit einem zweiten Anschlag 83 ausgebildet (Fig. 7). Diese beiden Anschläge 82, 83 werden gebildet, durch eine über einen Teil des Umfangs am unteren Rand des Sperrrings 71 vorgesehene Freistellung bzw. axiale Rückversetzung 84. Im montierten Zustand ragt der Mitnehmer 80 in radialer Richtung durch den Schlitz 81 in dem Zwischengehäuse 21 hindurch und in den Bereich der Rückversetzung 84 des Sperrrings 71 hinein und kann er so auf den Anschlag 82 einerseits oder den Anschlag 83 andererseits einwirken. Ein Verschwenken des Arretierrings 13 bewirkt folglich ein Verschwenken des Sperrrings 71 und damit eine Verschiebung der beiden Riegel 76.

Wie an der Darstellung des Sperrrings 71 in Fig. 7 zu erkennen ist, weist die Rückversetzung 84 eine Bogenlänge auf, die einem Winkel von etwa 70° entspricht. Andererseits ist vorgesehen, dass der Schlitz 81 in dem Zwischengehäuse 21 sich über etwa 90° erstreckt (Fig. 8). Ein Verschwenken des Sperrrings 71 und damit eine Verschiebung der Riegel 76 erfolgt aber nur über einen Winkelbereich der Schwenkbewegung des Arretierrings 13 in dem der Mitnehmer 80 entweder an dem Anschlag 82 oder dem Anschlag 83 des Sperrrings 71 anliegt. Über den dazwischen liegenden Winkelbereich hinweg - wenn der Mitnehmer 80 an keinem der beiden Anschläge 82, 83 anliegt - findet keine direkte Übertragung der Schwenkbewegung des Arretierrings 13 auf den Sperrring 71 statt. Die Übertragung der Schwenkbewegung von dem Arretierring 13 auf den Sperrring 71 weist somit einen entsprechend großen Totgang auf. Der Bewegungsbereich der Riegel 76 bzw. des Sperrrings 71 entspricht somit nur etwa 20°.

Gemäß einer alternativen Ausführungsvariante könnten der Arretierring 13 und der Sperrring 71 auch direkt miteinander gekoppelt bzw. fest miteinander verbunden sein. Die Ausbildung gemäß dem beschriebenen Ausführungsbeispiel hat jedoch den Vorteil, dass ein unbeabsichtigtes Lösen der Arretierung des Stellknopfs 12 dadurch weitestgehend vermieden werden kann. Von Vorteil ist auch, dass für den Benutzer die beiden möglichen Zustände der Arretierung, "arretiert" und "nicht arretiert", von außen deutlich voneinander unterschieden werden können, da sie als ein Viertel einer vollen Umdrehung des Arretierrings 13 leicht ekennbar sind.

Gemäß der Darstellung in Fig. 7 weist der Sperrring 71 an einer Stelle seines Umfangs eine Lücke 85 seiner Ringform auf. Der Sperrring 71 ist somit als ein sogenannter Spreizteil ausgebildet, wodurch seine Montage im Inneren des Zwischengehäuses 21 erleichtert wird. Zu seiner axialen Lagefixierung in dem Zwischengehäuse 21 weist dieses an seinem inneren Umfang eine nach innen vorstehende Stufe 86 auf, an der der Sperrring 71 mit seinem unteren Rand einrasten kann (Fig. 8).

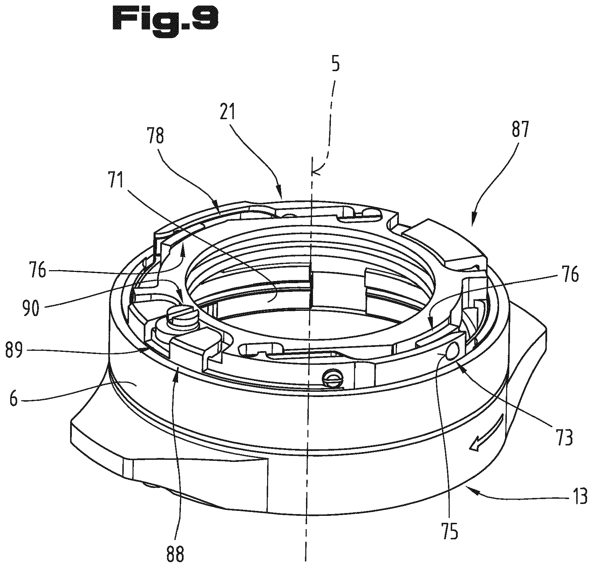

Die Fig. 9 zeigt das Zwischengehäuse 21 mit dem Arretierring 13, dem Sperrring 71 (Riegel 76) als auch den Haltekugeln 73 und den Federn 78, wie in Fig. 6 dargestellt, gemeinsam mit den an dem Zwischengehäuse 21 angeordneten Indexring 6. Der Indexring 6 ist im Wesentlichen rohrförmig ausgebildet und umschließt so wie auch der Arretierring 13 die äußere Mantelseite des Zwischengehäuses 21, wobei er oberhalb des Arretierrings 13 angeordnet ist. Der Indexring 6 umfasst neben seinem rohrförmigen Abschnitt einen ersten Anschlag 87 und einen zweiten Anschlag 88 die um 180° versetzt am oberen Rand des Umfangs des Indexrings 6 angeordnet sind. Die Anschläge 87, 88 des Indexrings 6 sind dabei an einer Oberseite des kreisscheibenförmigen Abschnitts 23 des Zwischengehäuses 21 anliegend angeordnet. Der zweite Anschlag 88 des Indexrings 6 ist außerdem zweiteilig ausgebildet, in dem er einen radial durchgehenden Schlitz 89 aufweist. Der Schlitz 89 des zweiten Anschlags 88 dient der Aufnahme einer mit einer Justierschraube 90 verbundenen Exzenterscheibe. Die Justierschaube 90 ist dazu in den kreisscheibenförmigen Abschnitt 23 des Zwischengehäuses 21 eingeschraubt. Der Indexring 6 kann mit Hilfe dieser Justierschraube 90 um einen ausreichend großen Winkelbereich relativ zu dem Zwischengehäuse 21 um die Rotationsachse 5 verdreht werden, sodass der an dem Indexring 6 angebrachte Nullindex 7 relativ zu den Teilstrichen der Skala 4 an der Trägerhülse 3 ausgerichtet und somit justiert werden kann (Fig. 3, 5).

Zum Einstellen der Justierschraube 90 ist in dem kreisscheibenförmigen Abschnitt des Kragens 28 der Trägerhülse 3 ein im Wesentlichen kreisbogenförmiger Schlitz 91 ausgebildet. Dieser ermöglicht auch im zusammengebauten Zustand des Stellknopfs 12 bzw. wenn die Trägerhülse 3 mit dem Zwischengehäuse 21 verbunden ist den Zugang zur Justierschraube 90, um die erforderliche Einstellung vornehmen zu können (Fig. 5, 6). Dazu ist selbstverständlich erforderlich, zuerst den Kappenring 11 und die Indexelemente 8, 9, 10 von dem Stellknopf 12 zu entfernen (Fig. 3).

Für eine zuverlässige Anwendung von Stelltürmen 12 bzw. Bedienungselementen 1 ist es wesentlich, einmal gefundene Grundeinstellungen verlässlich kennzeichnen zu können, um diese erforderlichenfalls - nach zwischenzeitlich vorgenommenen Änderungen der Einstellung - wieder auffinden zu können. Bei dem erfindungsgemäßen Bedienungselement 1 ist dazu das Rumpfmodul 19 mit einem Drehring 92 ausgestattet (Fig. 4). Der Drehring 92 ist mit der Rastnabe 31 drehgekoppelt, wobei er dazu auf dem Scheibenabschnitt 33 der Rastnabe 31 aufliegend angeordnet ist. Der Drehring 92 kann so auch als Drehgriff zur Verstellung der Spindel 15 verwendet werden. Zur Kopplung des Drehrings 92 mit der Rastnabe 31 stehen eine Innenverzahnung 93 des Drehrings 92 mit einer Außenverzahnung 94 der Rastnabe 31 miteinander in Eingriff. Dabei weisen sowohl die Innenverzahnung 93 an dem Drehring 92 als auch die Außenverzahnung 94 an der Rastnabe 31 in zur Rotationsachse 5 paralleler Richtung eine Ausdehnung auf, die etwa einem Drittel einer Höhe 95 des Drehrings 92 entspricht. Durch anheben des Drehrings 92 um einen entsprechend großen Verstellweg kann daher die Kupplung zwischen der Außenverzahnung 94 der Rastnabe 31 und der Innenverzahnung 93 des Drehrings 92 aufgehoben werden. Daran anschließend kann die Winkelposition des Drehrings 92 relativ zur Rastnabe 31 geändert und sodann in einer neuen Position wieder mit der Außenverzahnung 94 der Rastnabe 31 gekoppelt werden. Damit die gewählte und so eingestellte Winkelposition des Drehrings 92 sicher erhalten bleibt, sind die Rastnabe 31 und der Drehring 92 unter Zwischenschaltung eines Federelementes 96 miteinander verbunden. Das Federelement 96 ist zwischen der Rastnabe 31 und dem Drehring 92 derart eingespannt, dass das Anheben des Drehrings 92 nur entgegen der rückstellenden Federkraft des Federelementes 96 möglich ist. Das Federelement 96 hält so den Drehring 92 in seiner Grundstellung, in der die Außenverzahnung 94 der Rastnabe 31 und die Innenverzahnung 93 des Drehrings 92 miteinander gekoppelt sind. Gemäß diesem Ausführungsbeispiel ist das Federelement 96 derart angeordnet, dass es zwischen einem unteren Rand der Verzahnung 30 der Rastnabe 31 einerseits und einem kreisscheibenförmigen Abschnitt 97 des Drehrings 92 andererseits eingespannt gehalten ist.

An einem äußeren Umfang des Drehrings 92 ist dieser mit einer Nullmarkierung 98 versehen. Gemäß diesem Ausführungsbeispiel ist die Nullmarkierung 98 an einem Umfang in einem oberen Randbereich des Drehrings 92 angeordnet. In diesem oberen Randbereich ist der Drehring 92 mit einer Rändelung versehen, wodurch ein sicheres Ergreifen des Drehrings 92 durch einen Benutzer erleichtert wird. In einem Fall in dem es erforderlich ist das Kopfmodul 18 des Betätigungselementes 1 von dem Rumpfmodul 19 abzunehmen, hat ein Benutzer die Möglichkeit die momentane Einstellung der Rastnabe 31 mit Hilfe des Drehrings 92 zu kennzeichnen. Dazu kann er den Drehring 92 entgegen der rückstellenden Federkraft des Federelementes 96 anheben, um ihn dann soweit zu verdrehen, dass die Nullmarkierung 98 auf ein markantes Merkmal am Umfang des Rumpfmoduls 19 hin ausgerichtet ist. Günstigerweise kann die Ausrichtung der Nullmarkierung 98 auf den als Verdrehsicherung fungierenden Stift 38 hin erfolgen. Durch die Wirkung des Federelementes 96 wird anschließend die Kopplung zwischen der Außenverzahnung 94 an der Rastnabe 31 und der Innenverzahung 93 des Drehrings 92 wieder hergestellt und wird in weiterer Folge die Relativstellung zwischen Rastnabe 31 und Drehring 92 aufrecht erhalten. Trotz im Anschluss möglicherweise erfolgender Verstellungen der Rastnabe 31 erlaubt die Nullmarkierung 98 ein einfaches Wiederauffinden der ursprünglichen Grundeinstellung der Rastnabe 31 bzw. der Spindel 15 des Betätigungselementes 1.

Die Ausbildung des Rumpfmodules 19 des erfindungsgemäßen Betätigungselementes 1 mit dem an der Rastnabe 31 einstellbaren Drehring 92 bietet zusätzlich auch noch den Vorteil, dass das Rumpfmodul 19 auch ohne das Kopfmodul 18 - wenn auch mit eingeschränktem Komfort - für sich alleine als Vorrichtung zum Einstellen der Lage einer Zielmarke eines Zielfernrohres verwendet werden kann. Ausgehend von der durch die Nullmarkierung 98 gekennzeichneten Grundeinstellung der Rastnabe 31 wird es einem erfahrenen Schützen zumindest nach einer Grobabschätzung möglich sein, die erforderliche Verstellung der Rastnabe 31 zum Einstellen der Lage der Zielmarke vorzunehmen.

Für eine reguläre Verwendung des erfindungsgemäßen Betätigungselementes 1 wird ein Benutzer günstigerweise darauf achten, das Kopfmodul 18 nur dann von dem Rumpfmodul 19 zu trennen oder umgekehrt nur dann wieder auf das Rumpfmodul 19 aufzusetzen, wenn der Stellknopf 12 in seine Grundstellung verdreht worden ist. Das heißt, wenn zuvor die Nullmarkierung der Skala 4 der Trägerhülse 3 auf den Nullindex 7 an dem Indexring 6 hin ausgerichtet worden ist (Fig. 1, Fig. 3).

Gemäß einer alternativen Ausführungsform umfasst das Betätigungselement 1 ein Rumpfmodul 19, bei dem die Rastnabe 31 in dem Rumpfgehäuse 16 frei drehbar gelagert ist. Das heißt, wenn das Kopfmodul 18 von dem Rumpfmodul 19 abgenommen ist, sind der Rastnabe 31 keine kleinsten Schritte bzw. Winkeleinheiten für eine Verdrehung in dem Rumpfgehäuse 16 vorgegeben. Stattdessen wird die Vorgabe einer nur schrittweisen bzw. inkrementellen Verstellung der Rastnabe 31 bzw. der Spindel 15 alleine durch die zwischen der Trägerhülse 3 und dem Zwischengehäuse 21 miteinander in Eingriff befindlichen Elemente der Haltekugel 73 und der Rastnutverzahung 72 bewirkt. Das heißt, dass gemäß diesem Ausführungsbeispiel eine Rasteinrichtung 41 in dem Rumpfmodul 19 nicht vorgesehen ist (Fig. 2, 4). Damit ist es möglich, ein System bzw. einen Bausatz eines Betätigungselementes 1 zur Verfügung zu stellen, bei dem dasselbe Rumpfmodul 19 mit einer Mehrzahl von unterschiedlichen Kopfmodulen 18 austauschbar kombiniert werden kann, wobei die Kopfmodule 18 mit Rastnutverzahnungen 72 einer jeweils unterschiedlichen Teilung bzw. unterschiedlicher Winkel-Schrittgröße ausgebildet sein können.

Die Ausführungsbeispiele zeigen mögliche Ausführungsvarianten des Betätigungselementes 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Fig. 1; 2, 3, 4; 5, 6, 7, 8; 9 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Betätigungselementes 1 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Betätigungselement | 31 | Rastnabe |
| 2 | Tubus | 32 | Rohrabschnitt |
| 3 | Trägerhülse | 33 | Scheibenabschnitt |
| 4 | Skala | 34 | Rand |
| 5 | Rotationsachse | 35 | Positionierring |
| 6 | Indexring | 36 | Schraubring |
| 7 | Nullindex | 37 | Nase |
| 8 | Zweites Indexelement | 38 | Stift |
| 9 | Drittes Indexelement | 39 | Ausnehmung |
| 10 | Viertes Indexelement | 40 | Ausnehmung |
| 11 | Kappenring | 41 | Rasteinrichtung |
| 12 | Stellknopf | 42 | Nut |
| 13 | Arretierring | 43 | Sperrkugel |
| 14 | Druckknopf | 44 | Rahmenhülse |
| 15 | Spindel | 45 | Sperrhülse |
| 16 | Rumpfgehäuse | 46 | Scheibenabschnitt |
| 17 | Längsachse | 47 | Stift |
| 18 | Kopfmodul | 48 | Langloch |
| 19 | Rumpfmodul | 49 | Tunnel |
| 20 | Schließmechanismus | 50 | äußere Spannhülse |
| 21 | Zwischengehäuse | 51 | innere Spannhülse |
| 22 | Abschnitt | 52 | Nut |
| 23 | Abschnitt | 53 | Scheibenabschnitt |
| 24 | Sicherungsring | 54 | äußere Druckfeder |
| 25 | unterer Hülsenabschnitt | 55 | innere Druckfeder |
| 26 | Nut | 56 | Schraubring |
| 27 | oberer Hülsenabschnitt | 57 | Druckfeder |
| 28 | Kragen | 58 | Vorsprung |
| 29 | Verzahnung | 59 | Vorsprung |
| 30 | Verzahnung | 60 | Stufe |
| 71 | Sperrring | | |
| 72 | Rastnutverzahnung | | |
| 73 | Halteelement | | |
| 74 | Mantelwand-Abschnitt | | |
| 75 | Lagerloch | | |
| 76 | Riegel | | |
| 77 | Schlitz | | |
| 78 | Feder | | |
| 79 | Ausnehmung | | |
| 80 | Mitnehmer | | |
| 81 | Schlitz | | |
| 82 | Anschlag | | |
| 83 | Anschlag | | |
| 84 | Rückversetzung | | |
| 85 | Lücke | | |
| 86 | Stufe | | |
| 87 | Anschlag | | |
| 88 | Anschlag | | |
| 89 | Schlitz | | |
| 90 | Justierschraube | | |
| 91 | Schlitz | | |
| 92 | Drehring | | |
| 93 | Innenverzahnung | | |
| 94 | Außenverzahnung | | |
| 95 | Höhe | | |
| 96 | Federelement | | |
| 97 | Abschnitt | | |
| 98 | Nullmarkierung | | |

## Patentansprüche

1. Betätigungselement (1) zum Einstellen der Lage einer Zielmarke eines Zielfernrohrs mit einem Rumpfgehäuse (16), einer in dem Rumpfgehäuse (16) um eine Rotationsachse (5) drehbar gelagerten Spindel (15), einem um die Rotationsachse (5) drehbar gelagerten Stellknopf (12) zum Bewegen der Spindel (15) und mit einer Arretierung zum Fixieren des Stellknopfs (12) relativ zu dem Rumpfgehäuse (16), wobei die Arretierung eine in dem Stellknopf (12), an einem Umfang verlaufende Rastnutverzahnung (72), zumindest ein mit der Rastnutverzahnung (72) in Eingriff stehendes Halteelement (73) und zumindest einen Riegel (76) zur formschlüssigen Fixierung des Halteelements (73) in einer Vertiefung der Rastnutverzahnung (72) umfasst, wobei das Halteelement (73) in einem drehfest mit dem Rumpfgehäuse (16) verbundenen Zwischengehäuse (21) gelagert ist, **dadurch gekennzeichnet, dass** in dem Zwischengehäuse (21) ein Sperrring (71) schwenkbar gelagert ist, wobei der zumindest eine Riegel (76) an dem Sperrring (71) angeordnet ist und dass der Riegel (76) an dem Sperrring (71) durch Verschwenken eines an einem äußeren Umfang des Zwischengehäuses (21) gelagerten Arretierrings (13) aus einer das Halteelement (73) in einer Vertiefung der Rastnutverzahnung (72) blockierenden Stellung in eine das Halteelement (73) nicht blockierende Stellung mit dem Sperrring (71) verschwenkbar ist.

2. Betätigungselement (1) nach Anspruch 1, **dadurch gekennzeichnet, dass** der Stellknopf (12) eine Trägerhülse (3) mit einem oberen Hülsenabschnitt (27) und einen kreisscheibenförmigen, nach außen ragenden Kragen (28) umfasst und die Rastnutverzahnung (72) an einem Innenumfang des Kragens (28) ausgebildet ist.

3. Betätigungselement (1) nach Anspruch 2, **dadurch gekennzeichnet, dass** an einem Außenumfang des Kragens (28) der Trägerhülse (3) eine Skala (4) ausgebildet ist.

4. Betätigungselement (1) nach Anspruch 2 oder 3, **dadurch gekennzeichnet, dass** die Trägerhülse (3) mit einem unteren Hülsenabschnitt (25) in dem Zwischengehäuse (21) drehbar gelagert ist, wobei in dem unteren Hülsenabschnitt (25) eine innenliegende Verzahnung (29) ausgebildet ist.

5. Betätigungselement (1) nach einem der vorhergehenden Ansprüche, **dadurch gekennzeichnet, dass** das Zwischengehäuse (21) einen rohrförmig ausgebildeten Abschnitt (22) und einen in einem oberen Endbereich daran anschließenden nach innen weisenden kreisringscheibenförmigen Abschnitt (23) umfasst.

6. Betätigungselement (1) nach einem der Ansprüche 4 bis 5, **dadurch gekennzeichnet, dass** an einem äußeren Umfang des unteren Hülsenabschnitts (25) der Trägerhülse (3) eine Nut (26) ausgebildet ist und die Lagerung der Trägerhülse (3) in dem kreisringscheibenförmigen Abschnitt (23) des Zwischengehäuses (21) durch einen in die Nut (26) eingesetzten Sicherungsring (24) axial fixiert ist.

7. Betätigungselement (1) nach einem der Ansprüche 5 bis 6, **dadurch gekennzeichnet, dass** auf dem kreisringscheibenförmigen Abschnitt (23) des Zwischengehäuses (21) ein Mantelwandabschnitt (74) mit einem in radialer Richtung verlaufenden Lagerloch (75) zur Aufnahme des Halteelements (73) ausgebildet ist.

8. Betätigungselement (1) nach einem der vorhergehenden Ansprüche, **dadurch gekennzeichnet, dass** das Halteelement (73) durch eine Kugel gebildet ist.

9. Betätigungselement (1) nach einem der Ansprüche 7 bis 8, **dadurch gekennzeichnet, dass** in dem kreisringscheibenförmigen Abschnitt (23) des Zwischengehäuses (21), dem Lagerloch (75) benachbart ein kreisbogenförmiger Schlitz (77) ausgebildet ist.

10. Betätigungselement (1) Anspruch 9, **dadurch gekennzeichnet, dass** der zumindest eine Riegel (76) durch den kreisbogenförmigen Schlitz (77) hindurchragt.

11. Betätigungselement (1) nach einem der vorhergehenden Ansprüche, **dadurch gekennzeichnet, dass** der Arretierring (13) um die Rotationsachse (5) schwenkbar ist.

12. Betätigungselement (1) nach einem der Ansprüche 5 bis 11, **dadurch gekennzeichnet, dass** an dem Arretierring (13) ein nach Innen vorstehender Mitnehmer (80) befestigt ist und in dem rohrförmigen Abschnitt (22) des Zwischengehäuses (21) ein über einen Teil des Umfangs verlaufender Schlitz (81) ausgebildet ist, wobei der Mitnehmer (80) durch den Schlitz (81) hindurchragt und mit dem Sperrring (71) bedarfsweise in Eingriff bringbar ist.

13. Betätigungselement (1) nach einem der vorhergehenden Ansprüche, **dadurch gekennzeichnet, dass** der Sperrring (71) mit einem ersten Anschlag (82) und mit einem zweiten Anschlag (83) ausgebildet ist, wobei der erste Anschlag (82) und der zweite Anschlag (83) durch eine an einem unteren Rand des Sperrrings (71) vorgesehene axiale Rückversetzung (84) gebildet sind.

14. Betätigungselement (1) nach einem der Ansprüche 12 bis 13, **dadurch gekennzeichnet, dass** der Mitnehmer (80) in die axiale Rückversetzung (84) des Sperrrings (71) hineinragt und durch Verschwenken des Arretierrings (13) zwischen dem ersten Anschlag (82) und dem zweiten Anschlag (83) hin und her bewegt werden kann.

15. Betätigungselement (1) nach einem der Ansprüche 12 bis 14, **dadurch gekennzeichnet, dass** der Mitnehmer (80) entweder an dem ersten Anschlag (82) oder an dem zweiten Anschlag (83) anliegt.

16. Betätigungselement (1) nach einem der Ansprüche 13 bis 15, **dadurch gekennzeichnet, dass** sich die axiale Rückversetzung (84) in dem Sperrring (71) über eine Bogenlänge erstreckt, die einem Winkel von etwa 70° entspricht, und dass sich der Schlitz (81) in dem Zwischengehäuse (21) über etwa 90° erstreckt.

17. Betätigungselement (1) nach einem der vorhergehenden Ansprüche, **dadurch gekennzeichnet, dass** der Sperrring (71) an einer Stelle seines Umfangs eine Lücke (85) in seiner Ringform aufweist.

18. Betätigungselement (1) nach einem der vorhergehenden Ansprüche, **dadurch gekennzeichnet, dass** an einem äußeren Umfang des Zwischengehäuses (21) ein Indexring (6) angeordnet ist, wobei der Indexring (6) einen Nullindex (7) aufweist und oberhalb des Arretierrings (13) angeordnet ist.

19. Betätigungselement (1) nach Anspruch 18, **dadurch gekennzeichnet, dass** der Indexring (6) einen ersten Anschlag (87) und einen zweiten Anschlag (88) umfasst, wobei die Anschläge (87, 88) um 180° versetzt an dem kreisringscheibenförmigen Abschnitt (23) des Zwischengehäuses (21) anliegend angeordnet sind.

20. Betätigungselement (1) nach Anspruch 19, **dadurch gekennzeichnet, dass** der erste oder der zweite Anschlag (87, 88) des Indexrings (6) einen radial durchgehenden Schlitz (89) aufweist und in dem Schlitz (89) eine Justierschraube (90) angeordnet ist.

21. Betätigungselement (1) nach Anspruch 20, **dadurch gekennzeichnet, dass** die Justierschraube (90) mit einer Exzenterscheibe ausgebildet ist, wobei die Justierschaube (90) in den kreisscheibenförmigen Abschnitt (23) des Zwischengehäuses (21) eingeschraubt ist.

22. Betätigungselement (1) nach einem der Ansprüche 4 bis 21, **dadurch gekennzeichnet, dass** zum Bewegen der Spindel (15) in dem Rumpfgehäuse (16) eine Rastnabe (31) drehbar gelagert ist, wobei die Rastnabe (31) einen oberen Rohrabschnitt (32) mit einer außenliegenden Verzahnung (30) aufweist, und wobei die außenliegende Verzahnung (30) mit der innenliegenden Verzahnung (29) des unteren Hülsenabschnitts (25) des Zwischengehäuses (21) in Eingriff steht.

23. Betätigungselement (1) nach Anspruch 22, **dadurch gekennzeichnet, dass** ein Drehring (92) mit der Rastnabe (31) drehgekoppelt verbunden ist, wobei der Drehring (92) auf einem Scheibenabschnitt (33) der Rastnabe (31) aufliegend angeordnet ist.

24. Betätigungselement (1) nach Anspruch 23, **dadurch gekennzeichnet, dass** der Drehring (92) mit einer Innenverzahnung (93) und die Rastnabe (31) mit einer Außenverzahnung (94) ausgebildet sind, wobei in einer Grundstellung die Innenverzahnung (93) und die Außenverzahnung (94) miteinander in Eingriff stehen.

25. Betätigungselement (1) nach Anspruch 24, **dadurch gekennzeichnet, dass** ein zwischen dem Drehring (92) und der Rastnabe (31) wirkendes Federelement (96) angeordnet ist, wobei unter der Wirkung des Federelementes (96) der Eingriff zwischen der Innenverzahnung (93) und der Außenverzahnung (94) aufrecht erhalten wird.

26. Betätigungselement (1) nach einem der Ansprüche 23 bis 25, **dadurch gekennzeichnet, dass** der Drehring (92) an einem äußeren Umfang in einem oberen Randbereich mit einer Nullmarkierung (98) versehen ist.

27. Betätigungselement (1) nach einem der Ansprüche 23 bis 26, **dadurch gekennzeichnet, dass** der Drehring (92) an seinem oberen Randbereich mit einer Rändelung ausgebildet ist.

28. Betätigungselement (1) nach einem der Ansprüche 25 bis 27, **dadurch gekennzeichnet, dass** der Drehring (92) entgegen der rückstellenden Federkraft des Federelementes (96) angehoben werden kann, wobei die Innenverzahnung (93) und die Außenverzahnung (94) außer Eingriff gebracht werden können.

29. Betätigungselement (1) nach einem der Ansprüche 2 bis 28, **dadurch gekennzeichnet, dass** in der Trägerhülse (3) ein Schließmechanismus (20) ausgebildet ist, wobei der Schließmechanismus (20) in einer geschlossenen Stellung formschlüssig mit der Rastnabe (31) verbunden ist.

30. Betätigungselement (1) nach Anspruch 29, **dadurch gekennzeichnet, dass** der Schließmechanismus (20) eine offene Stellung aufweist, wobei in der offenen Stellung das Betätigungselement (1) in ein Kopfmodul (18) und ein Rumpfmodul (19) getrennt werden kann.

31. Betätigungselement (1) nach einem der Ansprüche 22 bis 30, **dadurch gekennzeichnet, dass** das Rumpfmodul (19) zumindest das Rumpfgehäuse (16), die Spindel (15), die Rastnabe (31) und den Drehring (92) umfasst.

32. Betätigungselement (1) nach einem der Ansprüche 30 bis 31, **dadurch gekennzeichnet, dass** die Arretierung in dem Kopfmodul (18) angeordnet ist.

33. Betätigungselement (1) nach einem der Ansprüche 22 bis 32, **dadurch gekennzeichnet, dass** zwischen der Rastnabe (31) und dem Rumpfgehäuse (16) eine Rasteinrichtung (41) vorgesehen ist.

34. Betätigungselement (1) nach Anspruch 33, **dadurch gekennzeichnet, dass** ein Verhältnis zwischen einer Anzahl der Vertiefungen der Rasteinrichtung (41) zwischen der Rastnabe (31) und dem Rumpfgehäuse (16) und einer Anzahl der Vertiefungen der Rastnutverzahnung (72) ganzzahlig ist.

## Claims

1. An actuator element (1) for setting the position of a target mark of a sighting telescope having a rear housing (16), a spindle (15) mounted in the rear housing (16) so as to be rotatable about an axis of rotation (5), a setting knob (12) for moving the spindle (15), being mounted so as to be rotatable around the axis of rotation (5) and having a retainer for fixing the setting knob (12) relative to the rear housing (16), wherein the retainer comprises detent toothing (72) in the setting knob (12) extending around a circumference, at least one retaining element (73) engaging with the detent toothing (72) and at least one lock bar (76) for positively fixing the retaining element (73) in a recess of the detent toothing (72), wherein the retaining element (73) is mounted in a non-rotating manner in an intermediate housing (21) connected to the rear housing (16), **characterised in that** a locking ring (71) is pivotably mounted in the intermediate housing (21), wherein the at least one lock bar (76) is arranged on the locking ring (71) and **in that**, by pivoting a blocking ring (13) mounted on an outer circumference of the intermediate housing (21), the lock bar (76) on the locking ring (71) can be pivoted out of a position blocking the retaining element (73) in a recess of the detent toothing (72), into a position which does not block the retaining element (73) with the locking ring (71).

2. The actuator element (1) according to claim 1, **characterised in that** the setting knob (12) comprises a carrier sleeve (3) with a top sleeve portion (27) and a disk-shaped, outwardly extending collar (28), and the detent toothing (72) is disposed on an internal circumference of the collar (28).

3. The actuator element (1) according to claim 2, **characterised in that** a scale (4) is provided on an external circumference of the collar (28) of the carrier sleeve (3).

4. The actuator element (1) according to claim 2 or 3, **characterised in that** the carrier sleeve (3) is rotatably mounted by a bottom sleeve portion (25) in the intermediate housing (21), wherein internal toothing (29) is provided in the bottom sleeve portion (25).

5. The actuator element (1) according to one of the preceding claims, **characterised in that** the intermediate housing (21) comprises a tubular portion (22) and, adjoining it in a top end region, an inwardly pointing disk-shaped portion (23).

6. The actuator element (1) according to one of claims 4 and 5, **characterised in that** a groove (26) is provided in an external circumference of the bottom sleeve portion (25) of the carrier sleeve (3) and the position of the carrier sleeve (3) in the disk-shaped portion (23) of the intermediate housing (21) is axially fixed by means of a locking ring (24) inserted in the groove (26).

7. The actuator element (1) according to one of claims 5 to 6, **characterised in that** a casing wall portion (74) on the disk-shaped portion (23) of the intermediate housing (21) is provided with a positioning hole (75) extending in a radial direction for accommodating the retaining element (73).

8. The actuator element (1) according to one of the preceding claims, **characterised in that** the retaining element (73) is provided in the form of a ball.

9. The actuator element (1) according to one of claims 7 to 8, **characterised in that** an arcuate slot (77) is provided in the disk-shaped portion (23) of the intermediate housing (21) adjacent to the positioning hole (75).

10. The actuator element (1) according to claim 9, **characterised in that** the at least one lock bar (76) protrudes through the arcuate slot (77).

11. The actuator element (1) according to one of the preceding claims, **characterised in that** the blocking ring (13) can be pivoted around the axis of rotation (5).

12. The actuator element (1) according to one of claims 5 to 11, **characterised in that** an inwardly projecting driver (80) is secured to the blocking ring (13) and a slot (81) is provided in the tubular portion (22) of the intermediate housing (21) extending across a part of the circumference, wherein the driver (80) extends through the slot (81) and can be moved into engagement with the locking ring (71) as and when necessary.

13. The actuator element (1) according to one of the preceding claims, **characterised in that** the locking ring (71) is provided with a first stop (82) and a second stop (83), wherein the first stop (82) and second stop (83) are formed by an axial offset (84) provided on a bottom edge of the locking ring (71).

14. The actuator element (1) according to one of claims 12 to 13, **characterised in that** the driver (80) extends into the axial offset (84) of the locking ring (71) and can be moved backwards and forwards by pivoting the blocking ring (13) between the first stop (82) and second stop (83).

15. The actuator element (1) according to one of claims 12 to 14, **characterised in that** the driver (80) sits in contact with either the first stop (82) or the second stop (83).

16. The actuator element (1) according to one of claims 13 to 15, **characterised in that** the axial offset (84) in the locking ring (71) extends across an arc length corresponding to an angle of approximately 70° and **in that** the slot (81) in the intermediate housing (21) extends across approximately 90°.

17. The actuator element (1) according to one of the preceding claims, **characterised in that** the locking ring (71) has a gap (85) in its annular shape at one point of its circumference.

18. The actuator element (1) according to one of the preceding claims, **characterised in that** an index ring (6) is disposed on an external circumference of the intermediate housing (21) and the index ring (6) has a zero index (7) and is disposed above the blocking ring (13).

19. The actuator element (1) according to claim 18, **characterised in that** the index ring (6) comprises a first stop (87) and a second stop (88), wherein the stops (87, 88) are disposed on the disk-shaped portion (23) of the intermediate housing (21) offset by 180°.

20. The actuator element (1) according to claim 19, **characterised in that** the first or second stop (87, 88) of the index ring (6) has a radially extending slot (89) and an adjusting screw (90) is disposed in the slot (89).

21. The actuator element (1) according to claim 20, **characterised in that** the adjusting screw (90) is provided with an eccentric disk, wherein the adjusting screw (90) is screwed into the disk-shaped portion (23) of the intermediate housing (21).

22. The actuator element (1) according to one of claims 4 to 21, **characterised in that** a locking hub (31) is rotatably mounted in the rear housing (16) in order to move the spindle (15), wherein the locking hub (31) has a top tube portion (32) with external toothing (30), and wherein the external toothing (30) engages with the internal toothing (29) of the bottom sleeve portion (25) of the intermediate housing (21).

23. The actuator element (1) according to claim 22, **characterised in that** the swivel (92) is rotationally coupled with the locking hub (31) and the swivel (92) is disposed lying on a disk portion (33) of the locking hub (31).

24. The actuator element (1) according to claim 23, **characterised in that** the swivel (92) is provided with internal toothing (93) and the locking hub (31) with external toothing (94), wherein the internal toothing (93) and external toothing (94) engage with one another in a default position.

25. The actuator element (1) according to claim 24, **characterised in that** a spring element (96) is provided which acts between the swivel (92) and the locking hub (31), wherein the engagement between the internal toothing (93) and external toothing (94) is maintained by the action of the spring element (96).

26. The actuator element (1) according to one of claims 23 to 25, **characterised in that** the swivel (92) is provided with a zero marking (98) on an external circumference in a top edge region.

27. The actuator element (1) according to one of claims 23 to 26, **characterised in that** the swivel (92) is provided with knurling at its top edge region.

28. The actuator element (1) according to one of claims 25 to 27, **characterised in that** the swivel (92) can be lifted opposing the restoring spring force of the spring element (96), wherein the internal toothing (93) and external toothing (94) can be moved out of engagement.

29. The actuator element (1) according to one of claims 2 to 28, **characterised in that** a locking mechanism (20) is provided in the carrier sleeve (3), wherein the locking mechanism (20) is positively connected to the locking hub (31) in a closed position.

30. The actuator element (1) according to claim 29, **characterised in that** the locking mechanism (20) has an open position wherein the actuator element (1) can be separated into a front module (18) and a rear module (19) in the open position.

31. The actuator element (1) according to one of claims 22 to 30, **characterised in that** the rear module (19) comprises at least the rear housing (16), the spindle (15), the locking hub (31) and the swivel (92).

32. The actuator element (1) according to one of claims 30 to 31, **characterised in that** the retainer is disposed in the front module (18).

33. The actuator element (1) according to one of claims 22 to 32, **characterised in that** a catch (41) is provided between the locking hub (31) and the rear housing (16).

34. The actuator element (1) according to claim 33, **characterised in that** a ratio between a number of recesses of the catch (41) between the locking hub (31) and rear housing (16) and a number of recesses of the detent toothing (72) is a whole number.

## Revendications

1. Élément d'actionnement (1) pour le réglage de la position d'un réticule d'une lunette de visée avec une coque (16), un fuseau (15) logée de manière rotative autour d'un axe de rotation (5) dans la coque (16), un bouton de réglage (12), logé de manière rotative autour de l'axe de rotation (5), pour le déplacement du fuseau (15) et avec un dispositif d'arrêt pour la fixation du bouton de réglage (12) par rapport à la coque (16), le dispositif de blocage comprenant une denture à rainure d'encliquetage (72) s'étendant dans le bouton de réglage (12) sur une circonférence, au moins un élément de maintien (73) emboîté avec la denture à rainure d'encliquetage (72) et au moins un verrou (76) pour la fixation par complémentarité de forme de l'élément de maintien (73) dans un creux de la denture à rainure d'encliquetage (72), l'élément de maintien (73) étant logé dans un boîtier intermédiaire (21) relié de manière solidaire en rotation avec la coque (16), **caractérisé en ce que**, dans le boîtier intermédiaire (21), une bague de blocage (71) est logée de manière pivotante, l'au moins un verrou (76) étant disposé sur la bague de blocage (71) et **en ce que** le verrou (76) pivotant, au niveau de la bague de blocage (71), par pivotement d'une bague d'arrêt (13) logée au niveau d'une circonférence externe du boîtier intermédiaire (21) hors d'une position bloquant l'élément de maintien (73) dans un creux de la denture à rainure d'encliquetage (72) vers une position ne bloquant pas l'élément de maintien (73), avec la bague de blocage (71).

2. Élément d'actionnement (1) selon la revendication 1, **caractérisé en ce que** le bouton de réglage (12) comprenant un manchon de support (3) avec une portion de manchon supérieure (27) et un collet (28) en forme de disque, dépassant vers l'extérieur et la denture à rainure d'encliquetage (72) étant formée sur une circonférence interne du collet (28).

3. Élément d'actionnement (1) selon la revendication 2, **caractérisé en ce que**, sur une circonférence externe du collet (28) du manchon de support (3) est tracée une graduation (4).

4. Élément d'actionnement (1) selon la revendication 2 ou 3, **caractérisé en ce que** le manchon de support (3) est logé de manière rotative avec une portion inférieure du manchon (25) dans le boîtier intermédiaire (21), une denture interne (29) étant formée dans la portion inférieure du manchon (25).

5. Élément d'actionnement (1) selon l'une des revendications précédentes, **caractérisé en ce que** le boîtier intermédiaire (21) comprend une portion tubulaire (22) et une portion en forme de disque (23) prolongeant celle-ci dans une partie d'extrémité supérieure et orientée vers l'intérieur.

6. Élément d'actionnement (1) selon l'une des revendications 4 à 5, **caractérisé en ce que**, sur une circonférence externe de la portion inférieure (25) du manchon de support (3), est réalisée une rainure (26), et le palier du manchon de support (3) est fixé axialement dans la portion en forme de disque (23) du boîtier intermédiaire (21) par une bague de fixation (24) insérée dans la rainure (26).

7. Élément d'actionnement (1) selon l'une des revendications 5 à 6, **caractérisé en ce que**, sur la portion en forme de disque (23) du boîtier intermédiaire (21), est réalisée une portion de paroi enveloppe (74) avec un trou de logement (75) s'étendant dans la direction radiale, pour le logement de l'élément de maintien (73).

8. Élément d'actionnement (1) selon l'une des revendications précédentes, **caractérisé en ce que** l'élément de maintien (73) est constitué d'une sphère.

9. Élément d'actionnement (1) selon l'une des revendications 7 à 8, **caractérisé en ce que**, dans la portion en forme de disque (23) du boîtier intermédiaire (21), à proximité du trou de logement (75), est réalisée une fente en forme d'arc de cercle (77).

10. Élément d'actionnement (1) selon la revendication 9, **caractérisé en ce que** l'au moins un verrou (76) dépasse à travers la fente en forme d'arc de cercle (77).

11. Élément d'actionnement (1) selon l'une des revendications précédentes, **caractérisé en ce que** la bague d'arrêt (13) est pivotante autour de l'axe de rotation (5).

12. Élément d'actionnement (1) selon l'une des revendications 5 à 11, **caractérisé en ce que**, sur la bague d'arrêt (13) est fixé un taquet d'entraînement (80) dépassant vers l'intérieur et dans la portion tubulaire (22) du boîtier intermédiaire (21), est réalisée une fente (81) s'étendant sur une partie de la circonférence, l'élément d'entraînement (80) dépassant à travers la fente (81) et pouvant être emboîté si nécessaire avec la bague de blocage (71).

13. Élément d'actionnement (1) selon l'une des revendications précédentes, **caractérisé en ce que** la bague de blocage (71) comprend une première butée (82) et une deuxième butée (83), la première butée (82) et la deuxième butée (83) étant constituées d'un retrait axial (84) prévu sur un bord interne de la bague de blocage (71).

14. Élément d'actionnement (1) selon l'une des revendications 12 à 13, **caractérisé en ce que** l'élément d'entraînement (80) dépasse dans le retrait axial (84) de la bague de blocage (71) et peut être déplacé avec un mouvement de va-et-vient par le pivotement de la bague d'arrêt (13) entre la première butée (82) et la deuxième butée (83).

15. Élément d'actionnement (1) selon l'une des revendications 12 à 14, **caractérisé en ce que** l'élément d'entraînement (80) s'appuie soit contre la première butée (82) soit contre la deuxième butée (83).

16. Élément d'actionnement (1) selon l'une des revendications 13 à 15, **caractérisé en ce que** le retrait axial (84) s'étend dans la bague de blocage (71) sur une longueur d'arc de cercle qui correspond à un angle d'environ 70° et **en ce que** la fente (81) s'étend dans le boîtier intermédiaire (21) sur environ 90°.

17. Élément d'actionnement (1) selon l'une des revendications précédentes, **caractérisé en ce que** la bague de blocage (71) comprend, à un endroit de sa circonférence, une lacune (85) dans sa forme annulaire.

18. Élément d'actionnement (1) selon l'une des revendications précédentes, **caractérisé en ce que**, sur une circonférence externe du boîtier intermédiaire (21), est disposée une bague indexée (6), la bague indexée (6) comprenant un index zéro (7) et étant disposé au-dessus de bague d'arrêt (13).

19. Élément d'actionnement (1) selon la revendication 18, **caractérisé en ce que** la bague indexée (6) comprend une première butée (87) et une deuxième butée (88), les butées (87, 88) étant décalées de 180° et s'appuyant contre la portion en forme de disque (23) du boîtier intermédiaire (21).

20. Élément d'actionnement (1) selon la revendication 19, **caractérisé en ce que** la première ou la deuxième butée (87, 88) de la bague indexée (6) comprend une fente radiale continue (89) et, dans la fente (89), une vis de réglage (90).

21. Élément d'actionnement (1) selon la revendication 20, **caractérisé en ce que** la vis de réglage (90) est équipée d'une rondelle excentrique, la vis de réglage (90) étant vissée dans la portion en forme de disque (23) du boîtier intermédiaire (21).

22. Élément d'actionnement (1) selon l'une des revendications 4 à 21, **caractérisé en ce que**, pour le déplacement du fuseau (15) dans la coque (16), un moyeu d'encliquetage (31) est logé de manière rotative, le moyeu d'encliquetage (31) comprenant une portion tubulaire supérieure (32) avec une denture externe (30) et la denture externe (30) s'emboîtant avec la denture interne (29) de la portion inférieure du manchon (25) du boîtier intermédiaire (21).

23. Élément d'actionnement (1) selon la revendication 22, **caractérisé en ce qu'**une bague rotative (92) est reliée de manière couplée en rotation avec le moyeu d'encliquetage (31), la bague rotative (92) étant disposée de façon à s'appuyer contre une portion en forme de disque (33) du moyeu d'encliquetage (31).

24. Élément d'actionnement (1) selon la revendication 23, **caractérisé en ce que** la bague rotative (92) est munie d'une denture interne (93) et le moyeu d'encliquetage (31) est muni d'une denture externe (94), la denture interne (93) et la denture externe (94) étant emboîtés entre elles dans une position de base.

25. Élément d'actionnement (1) selon la revendication 24, **caractérisé en ce qu'**un élément de ressort (96), agissant entre la bague rotative (92) et le moyeu d'encliquetage (31), est prévu, l'emboîtement entre la denture interne (93) et la denture externe (94) étant maintenue par l'action de l'élément de ressort (96).

26. Élément d'actionnement (1) selon l'une des revendications 23 à 25, **caractérisé en ce que** la bague rotative (92) est munie, au niveau de sa circonférence, dans une zone de bord supérieure, d'un repère zéro (98).

27. Élément d'actionnement (1) selon l'une des revendications 23 à 26, **caractérisé en ce que** la bague rotative (92) est munie, au niveau de sa zone de bord supérieure, d'un moletage.

28. Élément d'actionnement (1) selon l'une des revendications 23 à 27, **caractérisé en ce que** la bague rotative (92) peut être soulevée à l'encontre de la force élastique de rappel de l'élément de ressort (96), la denture interne (93) et la denture externe (94) pouvant être déboîtées.

29. Élément d'actionnement (1) selon l'une des revendications 2 à 28, **caractérisé en ce que**, dans le manchon de support (3), est disposé un mécanisme de fermeture (20), le mécanisme de fermeture (20) étant relié, dans une position fermée, par complémentarité de forme, avec le moyeu d'encliquetage (31).

30. Élément d'actionnement (1) selon la revendication 29, **caractérisé en ce que** le mécanisme de fermeture (20) comprend une position ouverte, l'élément d'actionnement (1) pouvant être divisé, dans la position ouverte, en un module de tête (18) et un module de coque (19).

31. Élément d'actionnement (1) selon l'une des revendications 22 à 30, **caractérisé en ce que** le module de coque (19) comprend au moins la coque (16), le fuseau (15), le moyeu d'encliquetage (31) et la bague rotative (92).

32. Élément d'actionnement (1) selon l'une des revendications 30 à 31, **caractérisé en ce que** le dispositif d'arrêt est disposé dans le module de tête (18).

33. Élément d'actionnement (1) selon l'une des revendications 22 à 32, **caractérisé en ce que**, entre le moyeu d'encliquetage (31) et la coque (16), est prévu un dispositif d'encliquetage (41).

34. Élément d'actionnement (1) selon la revendication 33, **caractérisé en ce qu'**un rapport entre un nombre de creux du dispositif d'encliquetage (41) entre le moyeu d'encliquetage (31) et la coque (16) et un nombre de creux de la denture à rainure d'encliquetage (72) est un nombre entier.
